# EUROPEAN PATENT APPLICATION

(11) **EP 3 425 163 A1**
(43) Date of publication of application: **09.01.2019**
(21) Application number: 17179811.9
(22) Date of filing: 05.07.2017
(51) Int. Cl.: F01D 5/08, F01D 9/06, F02C 6/08

(54) **AIR GUIDING SYSTEM IN AN AIRCRAFT TURBO ENGINE**

(71) Applicant: Rolls-Royce Deutschland Ltd & Co KG, 15827 Blankenfelde-Mahlow (DE)
(72) Inventor: KAZAKOS, Charilaos, 10711 Berlin (DE)
(74) Representative: Maikowski & Ninnemann Patentanwälte Partnerschaft mbB

(57) **Abstract**

The invention relates to an air guiding system in an aircraft turbo engine, wherein at least one duct (1), in particular a pipe (1), guides an air flow (A) from an offtake (11) in the aircraft turbo engine (100) to at least one exit (2) in a region (21) upstream from at least one air flow opening (25) to at least one cavity (22), the at least one cavity (22) being in flow connection with a turbine stage (20), in particular a low pressure turbine stage (20), the at least one flow opening (25) being coupled with at least one air flow guiding element (30) for guiding a part of the air flow (A) through the at least one air flow opening (25) into the at least one cavity (22).

## Description

The invention relates to an air guiding system in an aircraft engine with the features of claim 1.

Air craft turbo engines generally comprise a secondary air system with all air flows within the turbo engine not directly contributing to engine thrust. Typically, the secondary air system comprises internal cooling and sealing air systems and external bleed systems (e.g. for anti-icing or cabin pressurization).

The internal cooling is e.g. required for blades, vanes, discs, cavities and casing of turbine stages. Sealing air is e.g. required to prevent a hot gas ingestion into turbine cavities and oil mist escaping from bearing chambers.

To guide air e.g. for these purposes, it is known to guide relatively cool air from an offtake (e.g. a compressor stage) towards a turbine stage.

The issue is that the pressure loss of the air flow should be managed efficiently.

This issue is addressed by an air guiding system according to claim 1.

In the air guiding system at least one duct, in particular a pipe, guides an air flow from an offtake in the aircraft turbo engine to at least one exit in a region upstream from at least one air flow opening (also called restrictor) to at least one cavity, the at least one cavity being in flow connection with a turbine stage, in particular a low pressure turbine stage. In this section of the aircraft engine air, in particular cooling air can be used. The duct transports the air to the target.

The at least one flow opening is coupled with at least one air flow guiding element for guiding a part of the air flow through the at least one air flow opening into the at least one cavity. The air flow guiding element e.g. can be used to reduce the pressure loss.

The at least one air offtake can, in one embodiment, be at a compressor stage in the aircraft turbo engine.

In a further embodiment, the distance of the at least one air duct exit to the leading edge of the at least one flow guiding element is minimized. The minimization of this distance also results in minimization of the volume of the region in which one part of the air flow is split away towards the air opening. The smaller this region is, the less expansion losses occur.

In a further embodiment the at least one air duct exit has a distance to the leading edge of the at least one airflow guiding element between 0,1 to 5 times the characteristic diameter of the air duct exit, in particular 0,5 to 3 times the characteristic diameter of the air duct exit. The characteristic diameter- as used generally in fluid mechanics - is the parameter which determines the flow behavior most. Here, the distance is made dependent on the diameter of the air duct. The diameter of the duct, e.g. at the exit of the duct, is understood to be the fluid dynamic characteristic diameter depending on the geometry of the duct or exit, as it is e.g. common in the definition of dimensionless flow characteristics (e.g. Reynolds number). If, e.g., the exit has a circular cross-section the diameter of the exit is the characteristic diameter.

In another embodiment the flow characteristic width of the at least one air flow guiding element is at least equal to the flow characteristic diameter of the at least one air flow opening and / or the at least one air duct exit and less than five times the flow characteristic diameter of the at least one air flow opening and / or the at least one air duct exit. Alternatively or in combination, the opening height of the at least one air flow guiding element is at least 0,5 times the flow characteristic diameter of the at least one air flow opening and less than three times the flow characteristic diameter of the at least one air flow opening. The width and / or the height of the flow guiding element are made dependent on the at least one air opening.

In a further embodiment the at least one air flow guiding element is at least partially wall-shaped. A wall can be an efficient geometric means for splitting an air flow into the air opening from the rest of the main air flow path.

Alternatively or in addition, the at least one air flow guiding element is at least partially having a curved wall and / or the air flow guiding element is scoop-shaped. A curved wall can form e.g. a form or a pouch on the wall. Scoops can e.g. have round cross-sections or rectangular cross-sections.

In a further embodiment the entry of the air flow guiding element for the incoming air flow is aligned with the air flow coming out of the air duct exit. It is also possible, that the at least one air flow guiding element is at least partially having a tube-shaped or funnel-shaped element directed towards the exit of the at least one air duct. Depending on the alignment of the element towards the exit, the flow to the at least one air opening can be controlled.

The air flow guiding element can, in one embodiment, be in one piece with the structure comprising the air flow opening. One way to achieve this is the pressing of a hole while leaving the remains from the pressing as flow guiding element.

The at least one air flow opening can have a diameter varying in main flow direction, in particular, it can be shaped like a Venturi tube in axial direction, with the latter becoming the restrictor (i.e. The air flow guiding element can, in one embodiment, be in one piece with the structure comprising the air flow opening).

The benefit of a Venturi shaped restrictor is the variable pressure losses across it, depending on the velocity. For example, at low engine power conditions (i.e. less flow resulting in lower air velocity) the losses will be minimal, however, at high engine power conditions (i.e. more flow resulting in high air velocity) the losses will increase (induced by flow separation at the diverging part of the Venturi, a mechanism which is not so powerful when the velocities are low) which is desirable since you want to restrict the flow at the condition where more flow costs (SFC).

The flow through the at least one air flow opening can also be shaped so that the air flow out is directed by an outflow guiding means, in particular it is angled in the direction of the rotational direction of the turbine stage, acting as a pre-swirl system. If the directed flow is directed towards the rotor of the turbine stage, the turbine can receive an additional torque (by means of not having to accelerate in the circumferential direction an amount of air, which, with this embodiment, is already pre-swirled) and also the total relative temperature of the approaching cooling air, as felt by the discs on the rotating frame of reference, will be cooler due to the smaller circumferential speed difference between the approaching cooling air (as it exits the restrictor) and the disc.

The air flow duct comprises at least partially a pipe section with a circular cross-section since this can be efficiently manufactured. In one embodiment the air flow flows through a nozzle guide vane, in particular a hollow nozzle guide vane upstream from the duct exit resulting in a cooling of the nozzle guide vane. With this arrangement there is no need for an adapter between the pipe and the hollow nozzle guide vane which would create losses.

Embodiments of the invention are shown in the figures, where
- Fig. 1: a schematic section of a secondary air sub-system guiding air to a turbine stage with an embodiment of an air guiding system;
- Fig. 2: a schematic view of a first embodiment of an air guiding system with a flow guiding element;
- Fig. 3: a schematic and perspective view of an embodiment of an air guiding system with a scoop-shaped air flow guiding element;
- Fig. 4: a schematic cross-section through a part of an embodiment of the air guiding system with a definition of the distance of an air flow exit into a region and an air opening into a cavity;
- Fig. 5: a schematic view of an embodiment of the air guiding system with a scoop-shaped air flow guiding element;
- Fig. 6: a schematic view of an embodiment of the air guiding system with a funnel-shaped air flow guiding element;
- Fig. 7: a schematic cross-section of an embodiment of the air guiding system with an air opening having a non-constant cross-section;
- Fig. 8: a schematic cross-section of an embodiment of the air guiding system with an air opening having a directed outlet air flow;
- Fig. 9: a schematic diagram of the pressure losses along the air path in the sub-system shown in Fig. 1 with and without an embodiment of an air guiding system;
- Fig. 10: a schematic representation of the functional relationship between mass flow an driving pressure ratio.

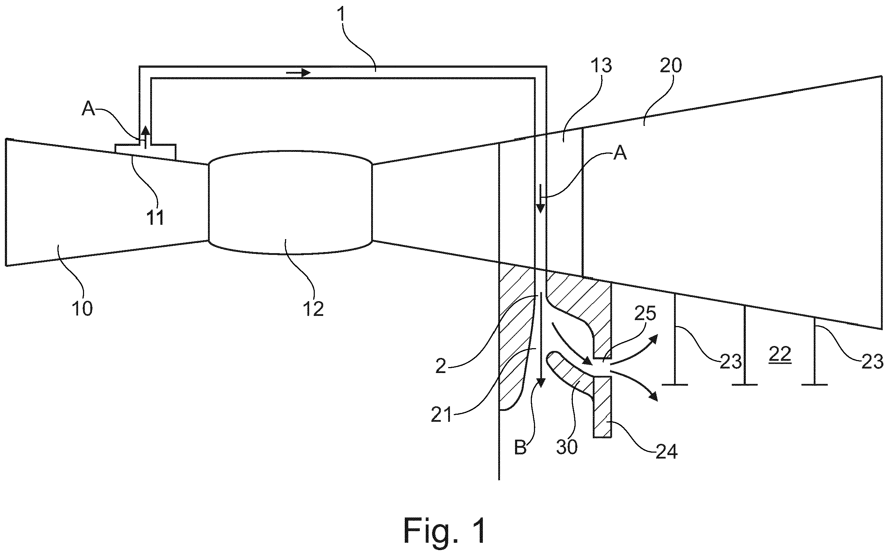

In Fig. 1 a schematic cross-section through an aircraft turbo engine is depicted, showing an overview of an embodiment of an air guiding system which is part of a larger (not depicted) secondary air system.

In the embodiment shown an air flow A is taken from a compressor stage 10 through an air duct 1 to a turbine stage 20. The turbine stage 20 in the embodiment shown is a low-pressure turbine stage. In other embodiments other turbine stages can be used.

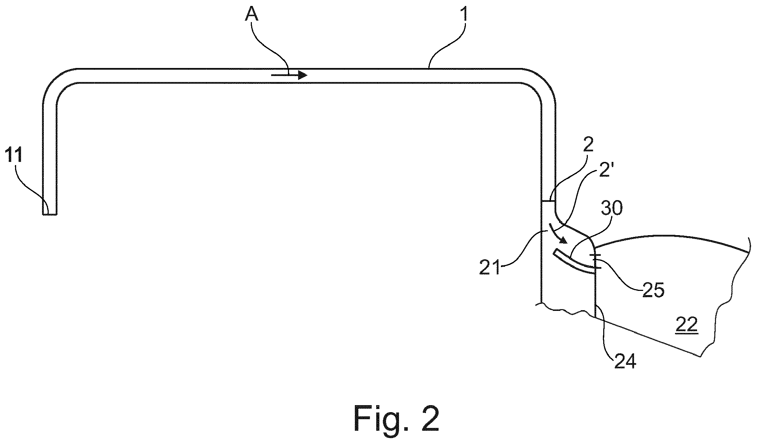

The air flow A is taken from an air offtake 11 and flows via an offtake manifold around the compressor stage 10 into the air the duct 1 first in a radially outward direction. The air duct 1 then changes direction into an essentially axial direction along the core of the aircraft turbo engine. In axial direction behind a combustion chamber 12, the air duct 1 changes direction radially inwards towards a nozzle guide vane (NGV) 13. In the embodiment shown in Fig. 1 the air flow A is channeled through the hollow nozzle guide vane 13 towards a duct exit 2. The duct exit 2 releases the air flow A into a region 21 which will be described further below (see e.g. Fig. 2).

From this region 21 a first part of the air flow B is flowing further into the aircraft turbo engine e.g. as sealing air. The further descriptions of embodiments of air guiding systems are not concerned with this first part of the air flow B.

A second part of the air flow A exiting from the duct exit 2 is flowing through an air flow opening 25 (also called restrictor) into a cavity 22 coupled to the turbine stage 20. The cavity 22 comprises discs 23 from the turbine rotors.

The embodiments of the air guiding system described below are chiefly concerned with the air flow situation in the region 21 upstream from and through the at least one flow opening 25.

In the embodiment of Fig. 1 the region 21 is split from a cavity 22 by a wall 24 comprising the at least one air flow opening 25. Therefore, the region 21 and the cavity 22 are in flow connection with each other.

The embodiment shown in Fig. 1 is just an example. In other embodiments, e.g. the design of the aircraft turbo engine, the air duct 1, the region 21 and the cavity 22 can be differently shaped and / or the relative spatial arrangement can be different.

The air duct 1 can e.g. also have a different shape and e.g. the relative size to other engine parts can be different. The air duct 1 can have a more complex shape extending also in the circumferential direction leading air from the offtake 11 to the duct exit 2.

In alternative embodiments the cross-section of the air duct 1 can, e.g., be elliptical or polygonal. The cross-section does not have to be constant along the air flow path.

In one alternative embodiment, the offtake 11 for the relatively cool air A can be at a different location in the aircraft turbo engine, e.g. taken from a different compressor stage. Also, the location and / or the shape of the region 21 and the cavity 22 can vary with the aircraft turbo engine design. In principle, it is possible that more than one air duct 1 carries the air flow A to the region 21.

In the following, further details of an air guiding system with an air flow guiding element 30 are described which in particular attempt to reduce or minimize the pressure loss along the air flow path. In particular, it is attempted to minimize the expansion losses by making the process of the expansion of the air smoother.

In Fig. 2 an embodiment of an air guiding system is shown. As in the embodiment described in Fig. 1 - reference can be made to the respective description - an air flow A is taken from an offtake 11 (e.g. from a compressor stage) through an air duct 1 and guided towards a duct exit 2. The exit 2 is in the general vicinity of a turbine stage (not shown here).

The air flow A is exiting the duct exit 2 into a region 21 which divides the air flow 2 into two streams.

The partial air flow 2' is guided towards the air flow opening 25 leading into a cavity 22 which is in flow connection with the turbine stage. This partial air flow 2' is guided towards the air flow opening by the air flow guiding element 30. The air flow guiding element can also be termed as a Smooth Flow Distributor (SFD).

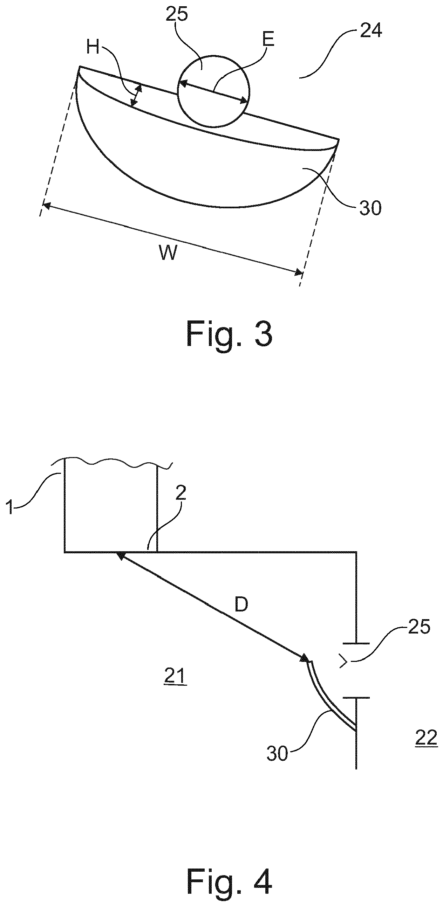

In the embodiment shown in Fig. 3, the air flow guiding element 30 is shaped like a scoop opening towards the incoming air flow from the air duct exit 2.

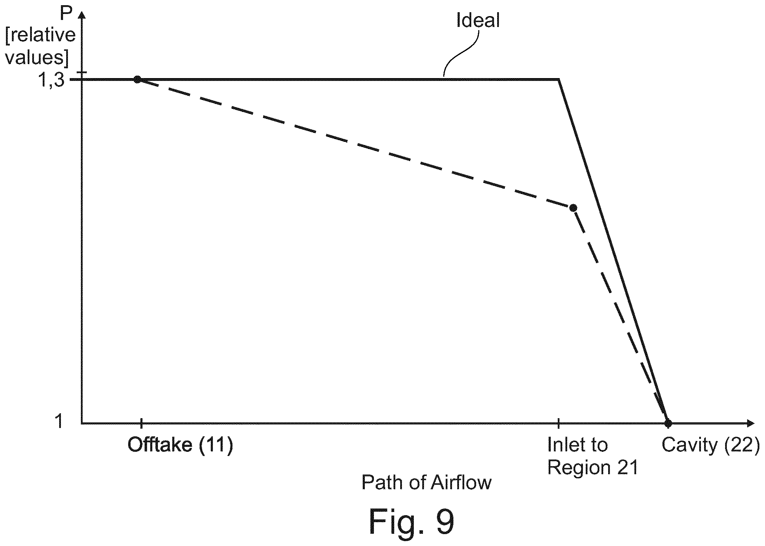

With the air flow guiding element 30 the pressure losses of the air flow in region 21 are reduced, since the dynamic pressure head is caught by the air flow guiding element 30. The effect is e.g. discussed in connection with Fig. 9.

It will be understood that this embodiment is just one possible configuration of the air flow guiding element 30 in region 21. There could be more than one air flow opening 25 in the wall 24, flow connecting the region 21 and the cavity 22. The air flow openings 25 can e.g. be located circumferentially around the turbo engine. The region 21 should have a small volume to reduce the expansion losses (see e.g. Fig. 4).

In Fig. 3 a perspective view of an air flow guiding element 30 is shown, which can, e.g., be used in connection with an embodiment shown in Fig. 2. Here, the air flow guiding element 30 is scoop-shaped having a curved wall. The rim of the wall is rounded so that the air flow can enter the scoop smoothly. The scoop guides the incoming air flow to the air flow opening 25 in the wall 24. In this embodiment, the air flow opening 25 is circular with a diameter E, being the characteristic flow diameter.

At the wall and at the height of the upper rim of the air flow opening 25 the scoop-like air flow guiding element 30 has a width W. The width W can be taken as characteristic length of the air flow guiding element 30. The flow characteristic width W of the at least one air flow guiding element 30 can be at least equal to the flow characteristic diameter E of the at least one air flow opening 25 and less than five times the flow characteristic diameter E of the at least one air flow opening 25. This means that air flow guiding element 30 can be just as wide as the air flow opening 25 or up to five times as wide as the air flow opening.

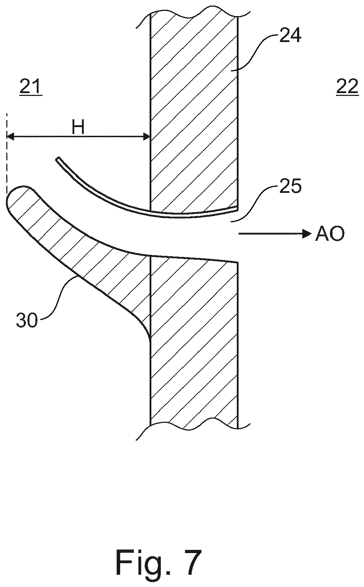

The height H of the scoop-like air flow guiding element 30, measured from the wall 24 to the rim of the air flow guiding element 30 (see also Fig. 7), is sized between 0.5 to 3 times the characteristic diameter E of the air flow opening 25. The height H is the opening height of the air flow guiding element 30 towards the incoming air flow.

Together, the width W and the height H define the opening cross-section of the air flow guiding element 30. The width W of the air flow guiding element can e.g. between the characteristic diameter of the air flow opening 25 and five times that diameter.

The embodiment shown in Fig. 4 is a variation of the embodiments shown in Fig. 2 and 3, so that reference can be made to the respective descriptions.

A further way of reducing the pressure losses is to make the distance D between the exit 2 of the air duct 1 and the air flow opening 25 small, ideally as small as possible.

The distance D in this embodiment is the straight distance between the center of the exit 2 and the leading edge of the flow guiding element 30. The distance can be between 0,1 to 5 times the characteristic diameter of the air duct 1, in particular 0,5 to 3 times the characteristic diameter of the air duct 1. By using this design, the region 21 in which the air flow A exits is relatively small. The characteristic diameter is to be understood as the diameter defining the flow characteristics, as it is e.g. used in determining Reynolds numbers. For a circular cross-section of the air duct 1, the characteristic diameter would be just the diameter of the air duct 1. In case more complex geometries are used, the characteristic diameter will accordingly be defined differently.

In other embodiments the distance D can be measured along the air flow path from the exit 2 to the air flow opening 25.

The making distance D relatively small is one approach to reduce the pressure loss.

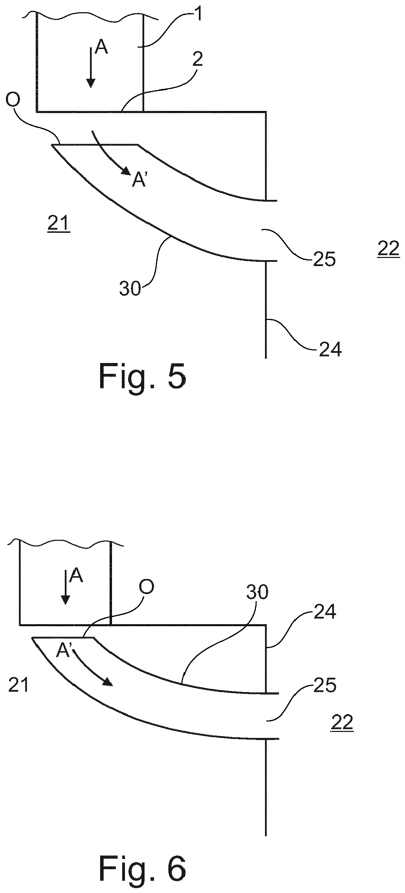

In Fig. 5 an embodiment of the air guiding system with a different air flow guiding element 30 is shown. Here, the opening O of the air flow guiding element 30 is aligned with the air flow A coming out of the exit 2 of the duct 1. As mentioned above, some part of the air flow A will intentionally not be channeled towards the air flow opening 25 for other purposes.

The alignment of the opening O towards the incoming air flow A can be adjusted so that the required sub-flow A' is channeled towards the air flow opening 25.

In the embodiment shown in Fig. 5, the air flow guiding element 30 is shaped like a tubular scoop with circular cross-section here matching the circular cross-section of the air exit 2. If the exit 2 of the air duct is shaped differently, the scoop-like air guiding system 30 can be shaped accordingly. In general, the shape of the air flow guiding element 30 can be designed so that there an alignment of the air flow A from the exit 2 and the opening O for the incoming sub-flow A' is achieved.

In Fig. 6, a variation of the embodiment of Fig. 5 is shown. Here, the relative position of the opening O is different. Also, the shape of the air flow guiding element 30 is different, i.e. it is funnel-shaped.

In Fig. 7 a further embodiment of the air guiding system is shown. Here, the air flow guiding element 30 is scoop-shaped, like e.g. shown in Fig. 2. The air flow guiding element 30 is here in one piece with the wall 24. The air flow opening 25 in the wall 24 is here shaped with a varying diameter, e.g. having a Venturi shape.

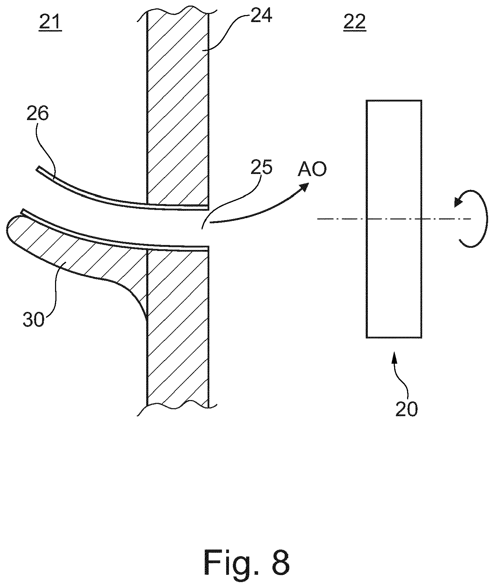

In Fig. 8 a further embodiment of the air guiding system is shown having an outflow guiding means 26. In the embodiment shown a low pressure turbine stage 20 is positioned in the cavity 22. The air flow guiding element 30 is channeling an air flow A towards the air flow opening 25, as described in connection with the embodiments above. In the embodiment of Fig. 8 the outflow AO of the air flow opening 25 is passing through the nozzle-like outflow guiding means 26 so it can be directed towards a specific target. Nozzle-like means here that the direction or characteristics of the air flow out AO of the air flow opening 25 can be controlled.

In this particular case the airflow out AO is aligned with the rotational direction of the turbine stage 20, acting as a pre-swirl system. The turbine stage 20 therefore receives some extra torque (by means of not having to accelerate in the circumferential direction an amount of air, which, with this embodiment, is already pre-swirled) and also the total relative temperature of the approaching cooling air, as felt by the discs on the rotating frame of reference, will be cooler due to the smaller circumferential speed difference between the approaching cooling air (as it exits the restrictor) and the disc.

In Fig. 2 to 8 different shapes of air flow guiding elements 30 were described. It will be understood that other shapes like e.g. walls, at least parallel to the wall 24, can be used to divert an sub-flow A' to the air flow opening 25.

In Fig. 9 the pressure loss along the air duct 1 is shown. The flow path of the air A along the air duct 1 is the coordinate on the x-axis. The pressure along the air duct 1, in relative units, is the coordinate on the y-axis. The numerical pressure data on the y-axis means that the exit pressure at the air flow opening 25 is arbitrarily set to 1. Then, the relative pressure at the offtake 11 is 1.3. There is pressure gradient from the offtake 11 to the air flow opening. 25.

In the ideal situation - shown in Fig. 9 as solid line - there is no pressure loss along the air flow path. The only pressure loss occurs at the air flow opening 25, i.e.at the restrictor. The pressure loss is e.g. due to the air flow taking a sharp turn from the radial direction into the axial direction and the expansion through the relatively small air flow opening 25 into the cavity 22. The so-called exit loss of a fluid expanding into a relatively large cavity can be significant.

In reality, there are pressure losses along the air duct 1 e.g. due to friction and / or bends in the pipe 1.

The dashed line in Fig. 9 shows schematically the real pressure behavior along the flow path in an air guiding system using the embodiments described above. Along the length of the air duct 1, starting at the offtake 11, some pressure drop inevitably occurs.

But the most significant pressure drop occurs very close to the air flow opening 25 at the expansion into the cavity 22, and only there.

The air guiding element 30 and / or the design of the flow path through region 21 to the air opening 25 are instrumental in shaping the pressure loss. In particular, minimizing the volume of the region 21 reduces the expansion losses significantly.

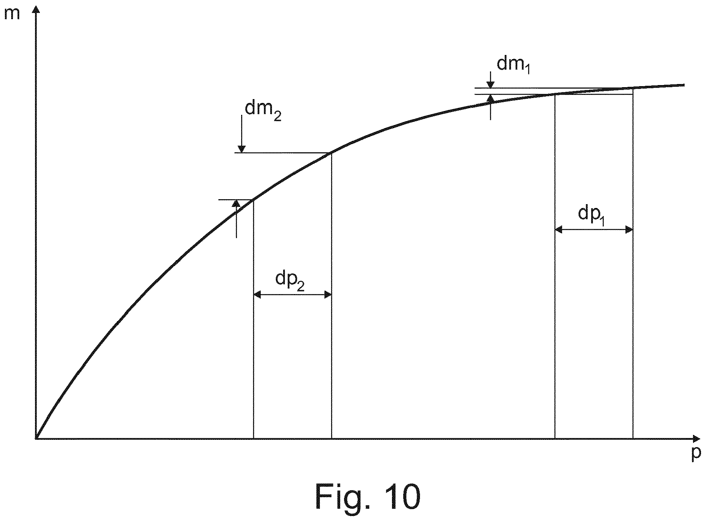

The reduction of the pressure losses also has a system-wide effect in the aircraft turbo engine. Which is illustrated in context with Fig. 10.

In the event of a failure, e.g. a customer-bleed duct rupture, the driving pressure ratio (p = (P @ air offtake 11) / (P @ cavity 22)) is reduced. A customer bleed duct rupture for example, means that more flow than intended escapes from the bleed system of the compressor. That lowers the offtake pressure which is used by the air system, hence lowers the driving pressure ratio of the system.

However, if the initial driving pressure ratio is high, then a potential reduction due to a failure case (like the aforementioned scenario) is less severe because the system operates closer to the flat regime of the flow characteristic.

The mass flow m is shown over the pressure ratio p in Fig. 10. The increase of the mass flow with an in increasing pressure ratio is getting smaller.

The higher the initial driving pressure ratio level is, the more robust the system is. The change in the pressure ratio dp₁ at a high pressure ratio level results in a relatively small change dm₁ in the mass flow. A same pressure ratio change dp₂ at a lower level results in a larger change dm₂ in the mass flow.

The rupture inevitably leads to a reduction in the driving pressure ratio and hence the mass flow. Due to the nonlinear dependency between the mass flow and the pressure ratio, the loss is less severe when the pressure ratio level is closer to the flat regime of the flow characteristic.

### List of reference numbers

- 1: duct, pipe for air flow
- 2: exit of duct (pipe) into region upstream from the air flow opening

- 10: compressor stage
- 11: air offtake
- 12: combustion chamber
- 13: nozzle guide vane (NGV)

- 20: low pressure turbine stage
- 21: region upstream from the air flow opening
- 22: cavity (downstream from the air flow opening)
- 23: discs of turbine rotors

- 24: wall separating region upstream from the air flow opening and the cavity
- 25: air flow opening (restrictor)
- 26: outflow guiding means

- 30: air flow guiding element

- A: air flow through air flow duct
- A': air flow to air flow opening
- AO: air flow out of air flow opening
- B: sealing air
- D: distance of the duct exit to the air flow opening
- E: characteristic diameter of air flow opening
- H: height of the air flow guiding element
- O: opening of air flow guiding element towards incoming air flow
- W: characteristic width of air flow guiding element

## Claims

1. Air guiding system in an aircraft turbo engine, wherein at least one duct (1), in particular a pipe (1), guides an air flow (A) from an offtake (11) in the aircraft turbo engine to at least one exit (2) in a region (21) upstream from at least one air flow opening (25) to at least one cavity (22),
the at least one cavity (22) is in flow connection with a turbine stage (20), in particular a low pressure turbine stage (20),
the at least one flow opening (25) being coupled with at least one air flow guiding element (30) for guiding a part of the air flow (A) through the at least one air flow opening (25) into the at least one cavity (22).

2. Air guiding system according to claim 1, with at least one air offtake (10) at a compressor stage (10) in the aircraft turbo engine.

3. Air guiding system according to claim 1 or 2, wherein the distance (D) of the at least one air duct exit (2) to the leading edge of the at least one flow guiding element (30) is minimized.

4. Air guiding system according to at least one of the preceding claims, wherein the at least one air duct exit (2) having a distance (D) to leading edge of the at least one flow guiding element (30) between 0,1 to 5 times the characteristic diameter of the air duct exit (2), in particular 0,5 to 3 times the characteristic diameter of the air duct exit (2).

5. Air guiding system according to at least one of the preceding claims, wherein the flow characteristic width (W) of the at least one air flow guiding element (30) is at least equal to the flow characteristic diameter (E) of the at least one air flow opening (25) and / or the at least one air duct exit (2) and less than five times the flow characteristic diameter (E) of the at least one air flow opening (25) and / or the at least one air duct exit.

6. Air guiding system according to at least one of the preceding claims, wherein the opening height (H) of the at least one air flow guiding element (30) is at least 0,5 times the flow characteristic diameter (E) of the at least one air flow opening (25) and less than three times the flow characteristic diameter (E) of the at least one air flow opening (25).

7. Air guiding system according to at least one of the preceding claims, wherein the at least one air flow guiding element (30) is at least partially wall-shaped, in particular, a wall essentially parallel to the plane of the at least one air flow opening,

8. Air guiding system according to at least one of the preceding claims, wherein the at least one air flow guiding element (30) is at least partially having a curved wall and / or the air flow guiding element is scoop-shaped.

9. Air guiding system according to at least one of the preceding claims, wherein the entry of the air flow guiding element (30) for the incoming air flow is aligned with the air flow coming out of the air duct exit (2)

10. Air guiding system according to at least one of the preceding claims, wherein the at least one air flow guiding element (30) is at least partially having a tube-shaped or funnel-shaped element directed towards the exit (2) of the at least one air duct (1).

11. Air guiding system according to at least one of the preceding claims, wherein the at least one air flow guiding element (30) is in one piece with the structure comprising the air flow opening (25).

12. Air guiding system according to at least one of the preceding claims, wherein the at least one air flow opening (25) has a diameter varying in axial direction, in particular it is shaped like a Venturi tube in axial direction.

13. Air guiding system according to at least one of the preceding claims, wherein the at least one air flow opening (25) is shaped so that the air flow out (AO) is directed by an outflow guiding means, in particular it is angled in the direction of the rotational direction of the turbine stage (20).

14. Air guiding system according to at least one of the preceding claims, wherein the air flow duct (1) comprises at least partially a pipe section with a circular cross-section.

15. Air guiding system according to at least one of the preceding claims, wherein the air flow (A) flows through a nozzle guide vane (13), in particular a hollow nozzle guide vane (13) upstream from the duct exit (2).
